# EUROPEAN PATENT SPECIFICATION

(11) **EP 4 455 097 B1**
(45) Date of publication and mention of the grant of the patent: **04.11.2026**
(21) Application number: 22911058.0
(22) Date of filing: 15.12.2022
(51) Int. Cl.: C02F 1/76, C02F 1/50, C02F 1/68, C02F 1/44

(54) **MICROORGANISM CONTAMINATION PREVENTION METHOD FOR WATER SYSTEM**
VERFAHREN ZUR VERHINDERUNG DER KONTAMINATION DURCH MIKROORGANISMEN FÜR EIN WASSERSYSTEM
PROCÉDÉ DE PRÉVENTION DE LA CONTAMINATION PAR DES MICRO-ORGANISMES DANS UN SYSTÈME D'ALIMENTATION EN EAU

(30) Priority: 20.12.2021 JP 2021205981
(43) Date of publication of application: 30.10.2024
(73) Proprietor: Kurita Water Industries Ltd., Tokyo 164-0001 (JP)
(72) Inventor: OHTSUKA, Yuta, Tokyo 164-0001 (JP); SHIMPO, Chikako, Tokyo 164-0001 (JP); NAKAGAWA, Gou, Tokyo 164-0001 (JP); TAKAHASHI, Junichi, Tokyo 164-0001 (JP); HAYAKAWA, Kunihiro, Tokyo 164-0001 (JP)
(74) Representative: Becker, Eberhard
(86) International application number: PCT/JP2022/046153
(87) International publication number: WO 2023/120350

(56) References cited:
- JP-A- 2014 176 799
- JP-A- 2014 176 799
- JP-A- 2019 122 943
- JP-A- 2020 081 939
- JP-B2- 5 099 045
- KR-B1- 102 101 320

## Description

### Technical Field

The present invention relates to a method for suppressing microorganism fouling in a water system. The method for suppressing microorganism fouling in the water system of the present invention is applied to, for example, a reverse osmosis (RO) membrane water supply system and is useful as a method for suppressing slime in the system and preventing fouling of the reverse osmosis membrane.

### Related Art

RO membrane devices that can efficiently remove electrolytes and medium and low molecular weight organic components are widely used in seawater desalination plants and waste water recovery plants. In a water treatment apparatus including the RO membrane device, usually, pretreatment devices such as a pressure filtration device, a gravity filtration device, a coagulation sedimentation treatment device, a pressure flotation filtration device, an immersion membrane device, and a membrane type pretreatment device are provided upstream of the RO membrane device. The water to be treated is pretreated by these pretreatment devices and then supplied to the RO membrane device for RO membrane separation treatment.

In such a water treatment apparatus, the microorganisms contained in the water to be treated grow in the piping of the apparatus or on the membrane surface and form slime, which may cause problems such as odor generation due to microorganism proliferation in the system and a decrease in the amount of water permeating through the RO membrane.

**In** order to prevent fouling caused by microorganisms, a commonly used method is to constantly or intermittently add a bactericide to the water to be treated, and sterilize the water to be treated or the inside of the apparatus while treating the water. A chlorine-based oxidizing agent such as sodium hypochlorite is used as the bactericide because it is inexpensive and relatively easy to handle. However, the RO membrane is generally a membrane that does not have chlorine resistance such as a polyamide-based polymer membrane, so if a chlorine-based oxidizing agent is added, the removal rate may decrease due to oxidative deterioration caused by free chlorine derived from the chlorine-based oxidizing agent.

Therefore, it is known to add a chlorine-based oxidizing agent on the upstream side of the water treatment apparatus and add a reducing agent such as sodium bisulfite (SBS) on the inlet side of the RO membrane device to reduce and remove the residual free chlorine, and after addition of the reducing agent, add a stabilized chlorine-based oxidizing agent or a stabilized bromine-based oxidizing agent such as chloramine or sodium chlorosulfamate, or a slime control agent such as an isothiazolone compound that suppresses microorganism growth, in order to suppress microorganism fouling in the piping or on the RO membrane surface from the addition point of the reducing agent to the inlet of the RO membrane device (Patent Documents 1 to 3).

Among these, a stabilized chlorine-based oxidizing agent and a stabilized bromine-based oxidizing agent have been widely used for their capability to suppress microorganism fouling. The suppression effects of the stabilized chlorine-based oxidizing agent and the stabilized bromine-based oxidizing agent were more prominent in some water systems than in others.

Sodium bisulfite (SBS), a reducing agent that is commonly added to reduce free chlorine upstream of the RO membrane, is usually added in excess to ensure that membrane deterioration is prevented, but excessive SBS is known to react with heavy metals and damage the membrane

### (Non-Patent Document 1).

Further relevant documents are JP 2014 176799 A, KR 102 101 320 B1, JP 5 099045 B2, JP 2020 081939 A.

### Citation List

### Patent Documents

[Patent Document 1] Japanese Patent Application Laid-Open No. 1-104310
[Patent Document 2] Japanese Patent Application Laid-Open No. 1-135506
[Patent Document 3] Japanese Patent Application Laid-Open No. 2006-263510

### Non-Patent Document

[Non-Patent Document 1] Water Solutions "FilmTecTM Reverse Osmosis Membranes Technical Manual" Form No. 45-DO1504-en, Rev. 7, February 2021 [Internet] <https://www.dupont.com/content/dam/dupont/amer/us/en/water-solutions/public/documents/en/45-D01504-en.pdf#page64>69 pages

### SUMMARY OF INVENTION

### Technical Problem

An object of the present invention is to provide a method for suppressing microorganism fouling in a water system, which can stably and effectively obtain the effects of suppressing microorganism fouling by adding a stabilized chlorine-based oxidizing agent composed of a chlorine-based oxidizing agent and a sulfamic acid compound and/or a stabilized bromine-based oxidizing agent composed of a bromine-based oxidizing agent and a sulfamic acid compound in a water system in which a reducing agent such as sodium bisulfite is added and which contains the residual reducing agent.

### Solution to Problem

The inventors of the present invention have found that the above problem can be solved by adding a stabilized chlorine-based oxidizing agent and/or a stabilized bromine-based oxidizing agent with a low sulfamic acid ratio (ratio of the sulfamic acid compound to effective chlorine amount of the chlorine-based oxidizing agent and/or effective chlorine conversion amount of the bromine-based oxidizing agent).

The essential features of the invention are laid out in the independent method claim 1. Further preferred embodiments are described in dependent claims 2-3.

### Effects of Invention

According to the present invention, it is possible to stably and effectively suppress microorganism fouling by adding a stabilized chlorine-based oxidizing agent and/or a stabilized bromine-based oxidizing agent in a water system to which a reducing agent such as sodium bisulfite is added and which contains the residual reducing agent.
Furthermore, it is possible to prevent membrane deterioration caused by the reaction between the reducing agent such as sodium bisulfite and heavy metals, thereby enabling smooth and favorable water treatment.

### BRIEF DESCRIPTION OF DRAWINGS

[FIG. 1] FIG. 1 is a graph showing the results of Example 1 and Comparative Example 1.
[FIG. 2] FIG. 2 is a graph showing the result of Test Example 2.

### DESCRIPTION OF EMBODIMENTS

An embodiment of the method for suppressing microorganism fouling in a water system according to the present invention will be described in detail below.

The method for suppressing microorganism fouling in a water system according to an embodiment of the present invention is a method for suppressing microorganism fouling in a water system that contains a reducing agent, characterized in including: adding a stabilized chlorine-based oxidizing agent composed of a chlorine-based oxidizing agent and a sulfamic acid compound, with a ratio of the sulfamic acid compound to 1 mole of effective chlorine of the chlorine-based oxidizing agent (hereinafter may be referred to as "sulfamic acid ratio") being 1 to 1.5 moles, and/or a stabilized bromine-based oxidizing agent composed of a bromine-based oxidizing agent and a sulfamic acid compound, with a ratio of the sulfamic acid compound to 1 mole of effective chlorine conversion amount of the bromine-based oxidizing agent being 1 to 1.5 moles to the water system so that an addition concentration of the stabilized chlorine-based oxidizing agent and/or the stabilized bromine-based oxidizing agent relative to a concentration of the reducing agent in the water system is 2.5 times to 10 times in molar ratio.

### <Mechanism>

As a result of investigation to solve the problem in the conventional art, the inventors have found that, as described below, the reducing agent contained in the water system affects the microorganism fouling suppression effects of the stabilized chlorine-based oxidizing agent and the stabilized bromine-based oxidizing agent.

A reducing agent such as sodium bisulfite (SBS) in water also reduces the stabilized chlorine-based oxidizing agent and the stabilized bromine-based oxidizing agent added in a later stage. Due to this reaction, the stabilized chlorine-based oxidizing agent composed of a chlorine-based oxidizing agent and a sulfamic acid compound and/or the stabilized bromine-based oxidizing agent composed of a bromine-based oxidizing agent and a sulfamic acid compound releases sulfamic acid. In this reaction, the higher the concentration of the residual reducing agent, the higher the ratio of sulfamic acid to effective chlorine in the system. As the ratio of sulfamic acid increases, the reactivity of the components decreases due to equilibrium.

However, by using a stabilized chlorine-based oxidizing agent and/or a stabilized bromine-based oxidizing agent with a low sulfamic acid ratio, even when reduced by a reducing agent such as sodium bisulfite, the effects of suppressing microorganism fouling can be maintained. It is also possible to prevent membrane deterioration caused by the reaction between a reducing agent such as sodium bisulfite and heavy metals.

### <Water system containing a reducing agent>

The water system to be treated in the present invention is not particularly limited as long as the water system contains a reducing agent. As described above, the present invention is effectively applied to a water system (containing a reducing agent) that, in a water treatment apparatus including an RO membrane device, after a chlorine-based oxidizing agent is added in a previous stage, in order to prevent oxidative deterioration of the RO membrane, a reducing agent such as sodium bisulfite (SBS) is added in excess relative to the chlorine-based oxidizing agent, resulting in residual reducing agent, and then a stabilized chlorine-based oxidizing agent and/or a stabilized bromine-based oxidizing agent is added in order to suppress microorganism fouling of the piping and the RO membrane, that is, an RO membrane water supply system.

The reducing agent contained in the water system is typically sodium bisulfite (SBS), but other reducing agents such as sodium thiosulfate may also be used.

To effectively obtain the effects of the present invention, it is preferable that the reducing agent concentration in the water system containing the residual reducing agent is 0.01 mg/L-Cl₂ or more, to 5 mg/L-Cl2 of less. On the other hand, if the reducing agent concentration is excessively high, the stabilized chlorine-based oxidizing agent and/or the stabilized bromine-based oxidizing agent added in the later stage may be reduced accordingly, increasing the required amount to be added and resulting in an increase in treatment costs. Therefore, the reducing agent concentration in the water system to be treated is 5 mg/L-Cl2 or less. In the present invention, the reducing agent concentration is expressed as a concentration converted into free chlorine, that is, a concentration of free chlorine that can be reduced by the reducing agent of that concentration (mg/L-Cl₂).

There is no particular limitation on the pH of the water system to be treated, which may be in a range of 2 to 12.

### <Stabilized chlorine-based oxidizing agent/stabilized bromine-based oxidizing agent>

The stabilized chlorine-based oxidizing agent used in the present invention is composed of a chlorine-based oxidizing agent and a sulfamic acid compound.
The stabilized bromine-based oxidizing agent used in the present invention is composed of a bromine-based oxidizing agent and a sulfamic acid compound.

There is no particular limitation on the chlorine-based oxidizing agent used in the stabilized chlorine-based oxidizing agent, which can include, for example, chlorine gas, chlorine dioxide, hypochlorous acid or salts thereof, chlorous acid or salts thereof, chloric acid or salts thereof, perchloric acid or salts thereof, chlorinated isocyanuric acid or salts thereof, etc. Among these, specific examples of the salt form can include alkali metal hypochlorite salts such as sodium hypochlorite and potassium hypochlorite; alkaline earth metal hypochlorite salts such as calcium hypochlorite and barium hypochlorite; alkali metal chlorite salts such as sodium chlorite and potassium chlorite; alkaline earth metal chlorite salts such as barium chlorite; other metal chlorite salts such as nickel chlorite; ammonium chlorate; alkali metal chlorate salts such as sodium chlorate and potassium chlorate; alkaline earth metal chlorate salts such as calcium chlorate and barium chlorate, etc. These chlorine-based oxidizing agents may be used alone or in combination of two or more. Among these, hypochlorite can be preferably used since it is easy to handle.

There is no particular limitation on the bromine-based oxidizing agent used in the present invention, which can include, for example, liquid bromine, bromine chloride, bromic acid or salts thereof, hypobromous acid or salts thereof, etc. These bromine-based oxidizing agents may be used alone or in combination of two or more.

The sulfamic acid compound may be a compound represented by the following general formula [1] or salts thereof.

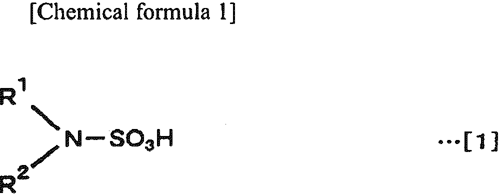

In the general formula [1], R¹ and R² each independently represent a hydrogen atom or a hydrocarbon group having 1 to 8 carbon atoms.

Such a sulfamic acid compound can include, for example, N-methylsulfamic acid, N,N-dimethylsulfamic acid, N-phenylsulfamic acid, etc. in addition to sulfamic acid in which R¹ and R² are both hydrogen atoms. Among the sulfamic acid compounds used in the present invention, examples of the salts of the compounds can include alkali metal salts such as sodium salts and potassium salts; alkaline earth metal salts such as calcium salts, strontium salts, and barium salts; other metal salts such as manganese salts, copper salts, zinc salts, iron salts, cobalt salts, and nickel salts; ammonium salts; guanidine salts, etc., and specifically include sodium sulfamate, potassium sulfamate, calcium sulfamate, strontium sulfamate, barium sulfamate, iron sulfamate, zinc sulfamate, etc. The sulfamic acids and sulfamates thereof can be used alone or in combination of two or more.

When a chlorine-based oxidizing agent such as hypochlorite and/or a bromine-based oxidizing agent is mixed with a sulfamic acid compound such as sulfamate, these are bonded to form chlorosulfamate and stabilized, and do not cause differences in dissociation depending on pH, as occurs with conventional chloramine, and thus fluctuations in free chlorine and/or free bromine concentration, making it possible to maintain a stable free chlorine and/or free bromine concentration in the water.

Generally, as the ratio of the chlorine-based oxidizing agent and/or the bromine-based oxidizing agent to the sulfamic acid compound, it is preferable to set the sulfamic acid compound to 1.0 to 5.0 moles per mole of the effective chlorine amount of the chlorine-based oxidizing agent and/or the bromine-based oxidizing agent converted into effective chlorine, and more preferably to 1.0 to 2.5 moles.

However, in the present invention that uses a stabilized chlorine-based oxidizing agent and/or a stabilized bromine-based oxidizing agent with a low sulfamic acid ratio, a stabilized chlorine-based oxidizing agent and/or a stabilized bromine-based oxidizing agent with the sulfamic acid ratio being 1 to 1.5 moles, preferably 1 to 1.4 moles, is used. In this case, if the sulfamic acid ratio exceeds 1.5 moles, the microorganism fouling suppression effects of the present invention cannot be obtained sufficiently. If the sulfamic acid ratio is less than 1 mole, decomposition of sulfamic acid occurs during production.

The chlorine-based oxidizing agent and/or the bromine-based oxidizing agent and the sulfamic acid compound may be added as a mixed aqueous solution or may be added separately.

The stabilized chlorine-based oxidizing agent and/or the stabilized bromine-based oxidizing agent according to the present invention may contain components other than the chlorine-based oxidizing agent and/or the bromine-based oxidizing agent and the sulfamic acid compound within a range that does not impair the effects thereof. Other components include an alkaline agent, azoles, an anionic polymer, phosphonic acids, etc.

The alkaline agent is used to stabilize the chlorine-based oxidizing agent and/or the bromine-based oxidizing agent in the stabilized chlorine-based oxidizing agent and/or the stabilized bromine-based oxidizing agent. As the alkaline agent, sodium hydroxide, potassium hydroxide, etc. are usually used.

### <Addition amount and addition form of the stabilized chlorine-based oxidizing agent and/or stabilized bromine-based oxidizing agent>

In the present invention in which the stabilized chlorine-based oxidizing agent and/or the stabilized bromine-based oxidizing agent is added with a low sulfamic acid ratio, the stabilized chlorine-based oxidizing agent and/or the stabilized bromine-based oxidizing agent is added so that the addition concentration of the stabilized chlorine-based oxidizing agent and/or the stabilized bromine-based oxidizing agent relative to the concentration of the reducing agent in the water system is 2.5 times to 10 times in molar ratio.
When the addition amount of the stabilized chlorine-based oxidizing agent and/or the stabilized bromine-based oxidizing agent is equal to or greater than the above lower limit, favorable microorganism fouling suppression effects can be obtained. It is preferable to increase the amount of the stabilized chlorine-based oxidizing agent and/or the stabilized bromine-based oxidizing agent added from the viewpoint of microorganism fouling suppression effects, but on the other hand, the chemical costs rise. Therefore, it is according to the invention to add the stabilized chlorine-based oxidizing agent and/or the stabilized bromine-based oxidizing agent so that the addition amount thereof is 2.5 to 10 times, particularly 2.5 to 5 times, in molar ratio relative to the concentration of the reducing agent in the water system.

### Examples

The effects of the present invention will be demonstrated below with reference to examples, comparative examples, and test examples.

The compounding compositions of Chemicals 1 and 2 used hereinafter are as shown in Table 1 below.

**[Table 1]**

| | | Chemical 1 | Chemical 2 |
|---|---|---|---|
| Chemical combination (part by mass) | Water | Residue | Residue |
| | 48% by mass sodium hydroxide | 12 to 24 | 12 to 24 |
| | Sulfamic acid | 12 | 18.0 |
| | 12% by mass sodium hypochlorite (12% as effective chlorine) | 60 | 50.0 |
| | Total amount (100% by mass) | 100 | 100 |
| H₃NSO₃/Cl₂ molar ratio | | 1.2 | 2.2 |

### [Example 1, Comparative Example 1]

An experiment was conducted to examine the difference in the effects of suppressing microorganism fouling depending on the sulfamic acid ratio (H₃NSO₃/Cl₂ molar ratio) of the stabilized chlorine-based oxidizing agent.

The effects of suppressing microorganism fouling were evaluated based on the degree of increase in differential pressure (pressure loss in the flow path) using the membrane fouling simulator in Non-Patent Document 1.

Substrates were added to the raw water (water to be treated) to promote the biofouling effect caused by microorganisms. Specifically, the following substrates were added to the raw water, citric acid: 1.2 mg/L as C, ammonium chloride: 0.6 mg/L as N, and sodium dihydrogen phosphate: 0.2 mg/L as P, to prepare the water to be treated.

The pH of the raw water was 7 to 8.5.

A stabilized chlorine-based oxidizing agent (Chemical 1 or Chemical 2) was added to the raw water so that the constant addition amount was 0.6 mg/L-Cl₂. In addition, from the 1.5^{th} day of water flow, sodium bisulfite (SBS) was further added to the above water to be treated so that the reducing agent concentration in the water to be treated was 0.1 mg/L-Cl₂ (the molar ratio of stabilized chlorine-based oxidizing agent/SBS=6 times).

As the stabilized chlorine-based oxidizing agent, Chemical 1 was used in Example 1, and Chemical 2 was used in Comparative Example 1.

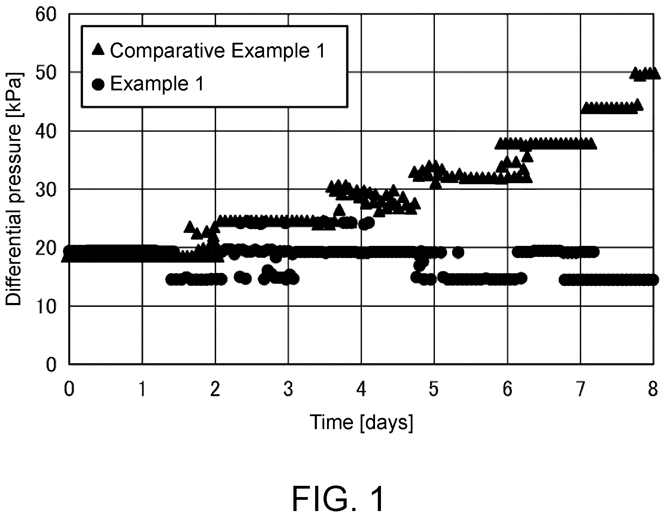

The results are shown in FIG. 1.

The following can be seen from FIG. 1.

Under both conditions, the increase in differential pressure was suppressed until sodium bisulfite was added, but in terms of the behavior after the addition of sodium bisulfite, the increase in differential pressure was not suppressed in Comparative Example 1, whereas the increase in differential pressure was effectively suppressed in Example 1.

Chemical 2, which has a high sulfamic acid ratio, is likely to lose the effects of suppressing microorganism fouling due to the addition of sodium bisulfite. In contrast thereto, it was shown that Chemical 1, which has a low sulfamic acid ratio, is more likely to maintain the effects of suppressing microorganism fouling even with addition of sodium bisulfite.

### [Test Example 1]

Chemical 1 mixed with various concentrations of sodium bisulfite (SBS) was exposed in sample water for 2 hours, and the change in ATP (adenosine triphosphate) in the water was observed. ATP is also called the energy currency of living organisms and is used as an indicator of microbial amount. The chemical treatment conditions are as shown in Table 2, and in all cases, the residual chlorine concentration after reaction with sodium bisulfite was adjusted to 1 mg/L-Cl₂ (however, in Condition 1, SBS was not added).

The sample water used was MF and UF treated water from a waste water recovery plant in the Kurita Development Center of Kurita Water Industries Ltd.

For ATP, the ATP measurement kits EnSure, Aquasnap Free, and Aquasnap Total manufactured by Hygiena were used. In addition, in order to capture the activity of microorganisms, the ATP value used was calculated by subtracting the Free value from the Total value.

The results are shown in Table 3.

**[Table 2]**

| | Condition 1 | Condition2 | Condition 3 | Condition 4 |
|---|---|---|---|---|
| Chemical 1 addition amount (mg/L) | 13 | 20 | 30 | 40 |
| Chlorine concentration before addition of SBS (mg/L-Cl₂) | 1 | 1.5 | 2.25 | 3 |
| Chlorine concentration after addition of SBS (mg/L-Cl₂) | 1 | 1 | 1 | 1 |
| Chlorine concentration reduced by SBS (mg/L-Cl₂) | 0 | 0.5 | 1.25 | 2 |
| Addition amount of Chemical 1 in chlorine conversion relative to reducing agent (molar ratio) | - | 3 | 1.8 | 1.5 |

**[Table 3]**

| | Condition 1 | | Condition 2 | | Condition 3 | | Condition 4 | |
|---|---|---|---|---|---|---|---|---|
| | ATP (RLU) | Suppression effects (%) | ATP (RLU) | Suppression effects (%) | ATP (RLU) | Suppression effects (%) | ATP (RLU) | Suppression effects (%) |
| | | 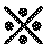 | | 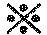 | | 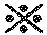 | | 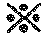 |
| Immediately after addition | 75 | 100 | 97 | 100 | 70 | 100 | 94 | 100 |
| After exposure for 2 hours | 12 | 16 | 19 | 19 | 36 | 51 | 62 | 66 |

| | | | | | | | | |
|---|---|---|---|---|---|---|---|---|
| 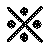 (ATP after exposure for 2 hours/ATP immediately after addition)×100 | | | | | | | | |

Under Condition 1 and Condition 2, the ATP concentration was effectively reduced, whereas under Condition 3 and Condition 4, the extent of the decrease in ATP was smaller. The effects of suppressing microorganism fouling were low for the amount of SBS under Condition 3, but the effects of suppressing microorganism fouling were sufficient under Condition 2 even with addition of SBS. It can be seen from this that the addition concentration of the stabilized chlorine-based oxidizing agent relative to the reducing agent is preferably 2.5 times or more in molar ratio in terms of the effects of suppressing microorganism fouling.

### [Test Example 2]

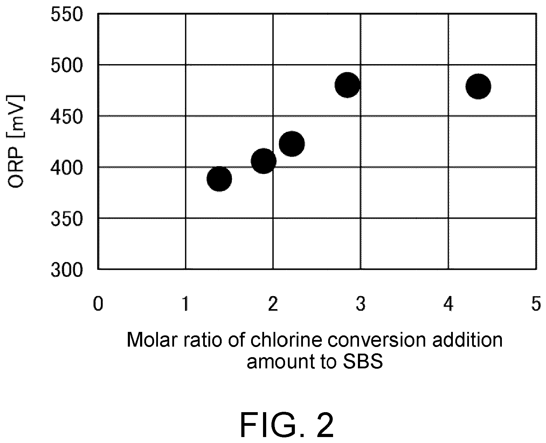

The oxidation-reduction potential (ORP) of Chemical 1 mixed with various concentrations of sodium bisulfite (SBS) in dechlorinated Nogi town water was observed. As in Test Example 1, in all cases, the residual chlorine concentration after reaction with sodium bisulfite was adjusted to 1 mg/L-Cl₂. The results, summarized in terms of the addition amount ratio of chlorine conversion of Chemical 1 relative to sodium bisulfite, are shown in Table 4 below and FIG. 2.

**[Table 4]**

| No | 1 | 2 | 3 | 4 | 5 |
|---|---|---|---|---|---|
| Addition amount of chlorine conversion relative to SBS (molar ratio) | 4.4 | 2.9 | 2.2 | 1.9 | 1.4 |
| ORP (mV) | 478 | 479 | 422 | 405 | 388 |

Since the ORP value when SBS was not added, as under Condition 1 of Test Example 1, is 495 mV, it was suggested that if the molar ratio of the chlorine conversion addition amount of Chemical 1 to SBS is 2.5 times or more, it has sufficient oxidation potential and can effectively suppress microorganism fouling.

Although the present invention has been described in detail with reference to specific embodiments, it will be apparent to those skilled in the art that various modifications can be made without departing from the scope of the present invention.

This application is based on Japanese Patent Application No. 2021-205981 filed on December 20, 2021.

## Claims

1. A method for suppressing microorganism fouling in a water system, comprising:
adding a reducing agent selected from sodium bisulfite or sodium thiosulfate; and
adding a stabilized chlorine-based oxidizing agent composed of a chlorine-based oxidizing agent and a sulfamic acid compound, with a ratio of the sulfamic acid compound to 1 mole of effective chlorine of the chlorine-based oxidizing agent being 1 to 1.5 moles, and/or a stabilized bromine-based oxidizing agent composed of a bromine-based oxidizing agent and a sulfamic acid compound, with a ratio of the sulfamic acid compound to 1 mole of effective chlorine conversion amount of the bromine-based oxidizing agent being 1 to 1.5 moles to the water system that contains the bisulfite ions, **characterized in that**
a concentration of the bisulfite ions in the water system, expressed as a concentration of free chlorine that is reduced by the bisulfite ions, is 0.01 mg/L-Cl₂ or more to 5 mg/L-Cl₂ or less, and
an addition concentration of the stabilized chlorine-based oxidizing agent and/or the stabilized bromine-based oxidizing agent relative to a concentration of the bisulfite ions in the water system is 2.5 times to 10 times in molar ratio.

2. The method for suppressing microorganism fouling in the water system according to claim 1, **characterized in that** the water system is a reverse osmosis membrane water supply system.

3. The method for suppressing microorganism fouling in the water system according to claim 1 or 2, **characterized in that** the solute that forms the bisulfite ions by dissolving in water is sodium bisulfite.

## Patentansprüche

1. Verfahren zur Unterdrückung von Bewuchs durch Mikroorganismen in einem Wassersystem, umfassend:
Zugabe eines Reduktionsmittels, ausgewählt aus Natriumbisulfat oder Natriumthiosulfat; und
Zugabe eines stabilisierten chlorbasierten Oxidationsmittels, das aus einem chlorbasierten Oxidationsmittel und einer Sulfaminsäureverbindung zusammengesetzt ist, wobei ein Verhältnis der Sulfaminsäureverbindung zu 1 Mol effektivem Chlor des chlorbasierten Oxidationsmittels 1 bis 1,5 Mol beträgt, und / oder eines stabilisierten brombasierten Oxidationsmittels, das aus einem brombasierten Oxidationsmittel und einer Sulfaminsäureverbindung zusammengesetzt ist, wobei ein Verhältnis der Sulfaminsäureverbindung zu 1 Mol der auf effektives Chlor umgerechneten Menge des brombasierten Oxidationsmittels 1 bis 1,5 Mol beträgt, zu dem Wassersystem, das die Bisulfit-Ionen enthält, **dadurch gekennzeichnet, dass**
eine Konzentration der Bisulfit-Ionen in dem Wassersystem, ausgedrückt als eine Konzentration an freiem Chlor, das durch die Bisulfit-Ionen reduziert wird, 0,01 mg/L-Cl₂ oder mehr bis 5 mg/L-Cl₂ oder weniger beträgt, und
die Zugabekonzentration des stabilisierten chlorbasierten Oxidationsmittels und / oder des stabilisierten brombasierten Oxidationsmittels bezogen auf eine Konzentration der Bisulfit-Ionen in dem Wassersystem im molaren Verhältnis das 2,5- bis 10-fache beträgt.

2. Verfahren zur Unterdrückung von Bewuchs durch Mikroorganismen in dem Wassersystem nach Anspruch 1, **dadurch gekennzeichnet, dass** das Wassersystem ein Wasserzufuhrsystem für eine Umkehrosmosemembran ist.

3. Verfahren zur Unterdrückung von Bewuchs durch Mikroorganismen in dem Wassersystem nach Anspruch 1 oder 2, **dadurch gekennzeichnet, dass** der gelöste Stoff, der durch Auflösen in Wasser die Bisulfit-Ionen bildet, Natriumbisulfit ist.

## Revendications

1. Procédé destiné à empêcher l'encrassement par des micro-organismes dans un système d'eau, comprenant :
l'ajout d'un agent réducteur choisi parmi le bisulfite de sodium ou le thiosulfate de sodium et
l'ajout d'un agent oxydant stabilisé à base de chlore, composé d'un agent oxydant à base de chlore et d'un composé d'acide sulfamique, le rapport entre le composé d'acide sulfamique et 1 mole de chlore effectif de l'agent oxydant étant compris entre 1 et 1,5 mole, et/ou d'un agent oxydant stabilisé à base de brome composé d'un agent oxydant à base de brome et d'un composé d'acide sulfamique, le rapport entre le composé d'acide sulfamique et 1 mole de chlore effectif quantité de conversion de l'agent oxydant à base de brome étant compris entre 1 et 1,5 mole, au système d'eau contenant les ions bisulfite, **caractérisé en ce que** la concentration en ions bisulfite dans le système d'eau, exprimée en concentration de chlore libre réduite par les ions bisulfite est comprise entre 0,01 mg/L-Cl₂ ou plus et 5 mg/L -Cl₂ ou moins, et
la concentration d'ajout de l'agent oxydant stabilisé à base de chlore et/ou de l'agent oxydant stabilisé à base de brome, par rapport à la concentration des ions bisulfite dans le système d'eau, est comprise entre 2,5 et 10 fois en rapport molaire.

2. Procédé destiné à empêcher l'encrassement par des micro-organismes dans un système d'eau la revendication 1, **caractérisé en ce que** le système d'eau est un système d'alimentation en eau à membrane d'osmose inverse.

3. Procédé destiné à empêcher l'encrassement par des micro-organismes dans un système d'eau selon la revendication 1 ou 2, **caractérisé en ce que** le soluté qui forme des ions bisulfite en se dissolvant dans l'eau est le bisulfite de sodium.
